# EUROPÄISCHE PATENTSCHRIFT

(11) **EP 3 331 948 B1**
(45) Veröffentlichungstag und Bekanntmachung des Hinweises auf die Patenterteilung: **10.07.2019**
(21) Anmeldenummer: 16747526.8
(22) Anmeldetag: 04.08.2016
(51) Int. Cl.: C08L 91/06, C08K 5/01, C08K 3/04, C08L 7/00, C08L 9/00, C08L 9/06, B60C 1/00, C08L 21/00

(54) **KAUTSCHUKMISCHUNG UND FAHRZEUGREIFEN**
RUBBER COMPOSITION AND TIRE
COMPOSITION DE CAOUTCHOUC ET PNEUMATIQUE

(30) Priorität: 07.08.2015 DE 102015215152
(43) Veröffentlichungstag der Anmeldung: 13.06.2018
(73) Patentinhaber: Continental Reifen Deutschland GmbH, 30165 Hannover (DE)
(72) Erfinder: SCHWARZENDAHL, Corinna, 30167 Hannover (DE)
(74) Vertreter: Finger, Karsten
(86) Internationale Anmeldenummer: PCT/EP2016/068624
(87) Internationale Veröffentlichungsnummer: WO 2017/025421

(56) Entgegenhaltungen:
- EP-A1- 2 821 247

## Beschreibung

Die Erfindung betrifft eine Kautschukmischung und einen Fahrzeugreifen.

Es ist bekannt, dass Fahrzeugreifen Bestandteile enthalten, die die Alterung und Oxidation der enthaltenen Kautschuke und sonstigen Bestandteile deutlich verlangsamen und somit die Haltbarkeit über eine relativ lange Lebensdauer des Reifens positiv beeinflussen.

Ferner ist es jedoch auch bekannt, dass in den äußeren Bauteilen von Fahrzeugreifen enthaltene Alterungsschutzmittel und Ozonschutzwachse an die Oberfläche migrieren können und dort einen sichtbaren Film bilden. Dieses sogenannte Ausblühen wirkt sich wiederum nachteilig auf das optische Erscheinungsbild des Fahrzeugreifens aus.

In der EP 0867472 A1 wird eine Kautschukmischung für die Seitenwand von Fahrzeugreifen offenbart, die ein Wachs enthält, welches eine Komponente mit 45 oder mehr Kohlenstoffatomen in einer Menge von 3 bis 10 Gew.-% enthält.

Auch in der EP 1876037 B1 wird eine Kautschukmischung, die Paraffinwachs enthält, für die Seitenwand von Fahrzeugreifen beschrieben.

Die EP 0490533 B1 offenbart eine Kautschukmischung, die Naturkautschuk und Polypropylen sowie eine Paraffinwachsmischung enthält, deren Gehalt an Kohlenwasserstoffen mit 31 bis 44 Kohlenstoffatomen jeweils nicht weniger als 2 Gewichtsprozente betragen.

Die genannten Schriften haben gemein, dass mit der Zusammensetzung der Kautschukmischung das optische Erscheinungsbild und/oder die Rissbeständigkeit verbessert werden soll.
In der JP S63-145346 wird eine Kautschukmischung offenbart, die ein Ozonschutzwachs mit zwei Maxima in der Verteilung bei C₂₄-C₂₉ und C₃₂-C₃₈ enthält. Hiermit soll eine bessere Rissbeständigkeit unter Ozonbelastung erzielt werden. Das optische Erscheinungsbild findet keine Erwähnung.

Der Erfindung liegt vor dem Hintergrund des Standes der Technik nun die Aufgabe zugrunde, eine Kautschukmischung für äußere Bauteile von Fahrzeugreifen bereitzustellen, die eine weitere Verbesserung hinsichtlich des Ausblühverhaltens zeigt, wobei die Ozonbeständigkeit und die Alterungsbeständigkeit sowie die übrigen physikalischen Eigenschaften, wie Zugfestigkeit und/oder Härte und/oder Reißeigenschaften und/oder Rückprallelastizitäten, nicht negativ beeinträchtigt und/oder sogar verbessert werden.

Gelöst wird die Aufgabe erfindungsgemäß dadurch, dass die Kautschukmischung folgende Bestandteile enthält:
- Wenigstens einen Kautschuk und
- Wenigstens einen verstärkenden Füllstoff und
- 0,5 bis 10 phr wenigstens einer Kohlenwasserstoffwachs-Zusammensetzung, wobei die Kohlenwasserstoffe der Wachs-Zusammensetzung 15 bis 110 Kohlenstoffatome aufweisen und wobei:
   a) 25 bis 40 % der Kohlenwasserstoffe lineare Kohlenwasserstoffe mit 20 bis 30 Kohlenstoffatomen sind; und wobei
   b) 5 bis 18 % der Kohlenwasserstoffe lineare Kohlenwasserstoffe mit 31 bis 38 Kohlenstoffatomen sind; und wobei
   c) 25 bis 40 % der Kohlenwasserstoffe lineare Kohlenwasserstoffe mit 39 bis 60 Kohlenstoffatomen sind; und wobei
   d) 5 bis 15 % der Kohlenwasserstoffe verzweigte Kohlenwasserstoffe mit 21 bis 31 Kohlenstoffatomen sind; und wobei
   e) weniger als 5 % der Kohlenwasserstoffe verzweigte Kohlenwasserstoffe mit 32 bis 39 Kohlenstoffatomen sind; und wobei
   f) 5 bis 15 % der Kohlenwasserstoffe verzweigte Kohlenwasserstoffe mit 40 bis 61 Kohlenstoffatomen sind,
   wobei die Prozentangabe in jedem Fall auf die Gesamtzahl an Kohlenwasserstoffen mit 15 bis 110 Kohlenstoffatomen bezogen ist.

Überraschenderweise zeigt die Kautschukmischung gegenüber dem Stand der Technik ein verbessertes Ausblühverhalten, was sich in einem verbesserten optischen Erscheinungsbild der Kautschukmischung nach einer entsprechenden Dauer zeigt. Gleichzeitig bleibt die Ozonbeständigkeit auf einem guten Niveau.
Die Kohlenwasserstoffwachs-Zusammensetzung dient hierbei als Ozonschutzwachs und wird unten ausführlich beschrieben.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die erfindungsgemäße Kautschukmischung enthält wenigstens einen Kautschuk.
Es kann sich auch um ein Gemisch aus zwei oder mehreren Kautschuken handeln.
Der wenigstens eine Kautschuk ist dabei bevorzugt ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk und/oder Flüssigkautschuken mit einem Molekulargewicht Mw von größer als 20000 g/mol und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-DienKautschuk kommen bei der Herstellung von technischen Gummiartikeln, wie Gurte, Riemen und Schläuche, zum Einsatz.

Bevorzugt handelt es sich bei dem wenigstens einen Kautschuk um wenigstens einen Dienkautschuk, der bevorzugt ausgewählt ist aus der Gruppe bestehend aus synthetischem Polyisopren (IR) und natürlichem Polyisopren (NR) und Styrol-Butadien-Kautschuk (SBR) und Polybutadien (BR).

Die erfindungsgemäße Kautschukmischung enthält gemäß einer bevorzugten Ausführungsform 15 bis 65 phr zumindest eines natürlichen Polyisoprens und/oder 15 bis 65 phr zumindest eines synthetischen Polyisoprens.
Bevorzugt beträgt die Menge in dieser Ausführungsform an natürlichem und/oder synthetischem Polyisopren 20 bis 60 phr, besonders bevorzugt 31 bis 52 phr.
Dies bedeutet, dass auch eine Kombination von natürlichem und synthetischem Polyisopren denkbar ist.

In einer besonders bevorzugten Ausführungsform der Erfindung enthält die Kautschukmischung 40 bis 52 phr, wenigstens eines natürlichen und/oder synthetischen Polyisoprens. Dies bedeutet, dass auch eine Kombination von natürlichem und synthetischem Polyisopren denkbar ist. Bevorzugt handelt es sich in dieser Ausführungsform jedoch um natürliches Polyisopren. Eine derartige Kautschukmischung zeigt insbesondere in der Seitenwand von Fahrzeugreifen ein besonders gutes Ausblühverhalten sowie vergleichsweise gute Reiß- und Abriebeigenschaften, insbesondere nach der Alterung.

Die erfindungsgemäße Kautschukmischung enthält gemäß einer bevorzugten Ausführungsform 15 bis 85 phr, bevorzugt 15 bis 60 phr, zumindest eines Polybutadiens. In einer besonders bevorzugten Ausführungsform der Erfindung enthält die Kautschukmischung 15 bis 50 phr, ganz besonders bevorzugt 15 bis 30 phr, wenigstens eines Polybutadiens. Eine derartige Kautschukmischung zeigt insbesondere in der Seitenwand von Fahrzeugreifen ein besonders gutes Ausblühverhalten sowie vergleichsweise gute Reiß- und Abriebeigenschaften, insbesondere nach der Alterung.

Dabei kann es sich bei den Kautschuken, insbesondere bei den genannten Dienkautschuken, um alle dem Fachmann bekannten Typen handeln.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlichen Polyisoprene mit einem oder mehreren synthetischen Polyisoprene denkbar.

Bei dem Styrol-Butadien-Copolymer kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem mittleren Molekulargewicht von 100000 bis 600000 g/mol (einhunderttausend bis sechshunderttausend Gramm pro Mol).

Bei dem Polybutadien (BR, Butadien-Kautschuk) kann es sich um alle dem Fachmann bekannten Typen handeln. Darunter fallen u.a. die sogenannten high-cis- und low-cis-Typen, wobei Butadien-Kautschuk mit einem cis-Anteil größer oder gleich 90 Gew.-% als high-cis-Typ und Butadien-Kautschuk mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Ein high-cis-Polybutadien ist z.B. Nd-BR (Neodym-katalysierter Butadien-Kautschuk). Mit Nd-BR werden besonders gute Vulkanisateigenschaften der Kautschukmischung erzielt.

Das oder die eingesetzte(n) Styrol-Butadien-Copolymere und/oder Butadien-Kautschuke (Polybutadien(e)) können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Die erfindungsgemäße Kautschukmischung enthält, insbesondere für die Verwendung in Fahrzeugreifen, wenigstens einen verstärkenden Füllstoff. Bei dem verstärkenden Füllstoff handelt es sich bevorzugt um wenigstens einen Ruß und/oder wenigstens eine Kieselsäure.

Bevorzugt enthält sie 10 bis 300 phr, bevorzugt 30 bis 300 phr, besonders bevorzugt 30 bis 200 phr, ganz besonders bevorzugt 30 bis 100 phr, zumindest eines verstärkenden Füllstoffs ausgewählt aus Ruß und/oder Kieselsäure.

Die erfindungsgemäße Kautschukmischung enthält gemäß einer bevorzugten Ausführungsform der Erfindung 25 bis 55 phr oder 60 bis 85 phr, bevorzugt 25 bis 49 phr oder 70 bis 80 phr, zumindest eines Rußes. Eine derartige Kautschukmischung zeigt insbesondere in der Seitenwand und/oder dem Hornprofil von Fahrzeugreifen ein besonders gutes Ausblühverhalten sowie vergleichsweise gute Reißeigenschaften, insbesondere nach der Alterung.

In einer ganz besonders bevorzugten Ausführungsform der Erfindung enthält die Kautschukmischung 25 bis 43 phr, besonders bevorzugt 27 bis 38 phr, zumindest eines Rußes.

Dabei sind alle dem Fachmann bekannten Ruß-Typen denkbar.
Bevorzugt wird jedoch ein Ruß eingesetzt, der eine Jodadsorptionszahl gemäß ASTM D 1510 von 15 bis 100 g/kg, bevorzugt 30 bis 100 g/kg, besonders bevorzugt 40 bis 100 g/kg, und eine DBP-Zahl gemäß ASTM D 2414 von 30 bis 150 ml/100 g, bevorzugt 50 bis 150 ml/100g, besonders bevorzugt 100 bis 150 ml/100g, aufweist.
Hiermit werden bei der Anwendung im Fahrzeugreifen besonders gute Rollwiderstands- und/oder Reißeigenschaften erzielt.

Gemäß einer bevorzugten Ausführungsform der Erfindung wird ein Ruß eingesetzt, der eine Jodadsorptionszahl gemäß ASTM D 1510 von 80 bis 100 g/kg und eine DBP-Zahl gemäß ASTM D 2414 von 115 bis 127 ml/100 g aufweist.
Gemäß einer weiteren bevorzugten Ausführungsform der Erfindung wird ein Ruß eingesetzt, der eine Jodadsorptionszahl gemäß ASTM D 1510 von 40 bis 60 g/kg und eine DBP-Zahl gemäß ASTM D 2414 von 115 bis 127 ml/100 g aufweist.

Die erfindungsgemäße Kautschukmischung kann neben Ruß noch weitere bekannte polare und/oder unpolare Füllstoffe enthalten.

Bevorzugt ist in der erfindungsgemäßen Kautschukmischung Ruß als alleiniger Füllstoff oder als Hauptfüllstoff enthalten, das heißt, dass die Rußmenge deutlich größer ist als die Menge an ggf. anderen enthaltenen Füllstoffen. Für den Fall, dass neben Ruß ein weiterer Füllstoff enthalten ist, handelt es sich bei diesem bevorzugt um Kieselsäure. Somit ist es auch denkbar, dass die erfindungsgemäße Kautschukmischung Ruß und Kieselsäure enthält, wie z.B. 25 bis 55 phr Ruß, bevorzugt 25 bis 49 phr, besonders bevorzugt 25 bis 43 phr, ganz besonders bevorzugt 27 bis 38 phr Ruß, in Kombination mit 0,1 bis 10 phr Kieselsäure. Gemäß einer weiteren bevorzugten Ausführungsform enthält die Kautschukmischung mit den vorstehend genannten Rußmengen 0 bis 3 phr Kieselsäure. In einer alternativen Ausführungsform sind z.B. 60 bis 85 phr Ruß, bevorzugt 70 bis 80 phr Ruß, in Kombination mit 0,1 bis 10 phr Kieselsäure denkbar. Gemäß einer weiteren bevorzugten Ausführungsform enthält die Kautschukmischung mit den vorstehend genannten Rußmengen 0 phr Kieselsäure, d.h. sie ist frei von Kieselsäure.
Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 130 bis 235 m²/g, und eine CTAB-Oberfläche (gemäß ASTM D 3765) von 30 bis 400 m²/g, bevorzugt von 30 bis 250 m²/g, besonders bevorzugt von 100 bis 250 m²/g und ganz besonders bevorzugt von 125 bis 230 m²/g, aufweist. Derartige Kieselsäuren führen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Zur Verbesserung der Verarbeitbarkeit und zur Anbindung der Kieselsäure und anderer ggf. vorhandener polarer Füllstoffe an den Dienkautschuk können dem Fachmann bekannte Silan-Kupplungsagenzien in Kautschukmischungen eingesetzt werden.
Hierbei können ein oder mehrere verschiedene Silan-Kupplungsagenzien in Kombination miteinander eingesetzt werden. Die Kautschukmischung kann somit ein Gemisch verschiedener Silane enthalten.
Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363® von der Firma Evonik Industries vertrieben werden.
Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.
Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.
Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Die erfindungsgemäße Kautschukmischung kann neben Ruß und ggf. Kieselsäure noch weitere bekannte polare und/oder unpolare Füllstoffe, wie Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern), enthalten.
Weiterhin ist es denkbar, dass die Kautschukmischung Kohlenstoffnanoröhrchen (carbon nanotubes (CNT) inklusive diskreter CNTs, sogenannten hollow carbon fibers (HCF) und modifizierter CNT enthaltend eine oder mehrere funktionelle Gruppen, wie Hydroxy-, Carboxy und Carbonyl-Gruppen) enthält.
Auch Graphit und Graphene sowie sogenannte "carbon-silica dual-phase filler" sind als Füllstoff denkbar.

Die Begriffe "Kieselsäure" und "Silika" werden im Rahmen der vorliegenden Erfindung, wie auch in der Fachwelt üblich, synonym verwendet.
Zinkoxid wird im Rahmen der vorliegenden Erfindung nicht als Füllstoff betrachtet.

Es ist erfindungswesentlich, dass die Kautschukmischung 0,5 bis 10 phr wenigstens einer Kohlenwasserstoffwachs-Zusammensetzung enthält, wobei die Kohlenwasserstoffe der Wachs-Zusammensetzung 15 bis 110 Kohlenstoffatome aufweisen und wobei:
a) 25 bis 40 % der Kohlenwasserstoffe lineare Kohlenwasserstoffe mit 20 bis 30 Kohlenstoffatomen sind; und wobei
b) 5 bis 18 % der Kohlenwasserstoffe lineare Kohlenwasserstoffe mit 31 bis 38 Kohlenstoffatomen sind; und wobei
c) 25 bis 40 % der Kohlenwasserstoffe lineare Kohlenwasserstoffe mit 39 bis 60 Kohlenstoffatomen sind; und wobei
d) 5 bis 15 % der Kohlenwasserstoffe verzweigte Kohlenwasserstoffe mit 21 bis 31 Kohlenstoffatomen sind; und wobei
e) weniger als 5 % der Kohlenwasserstoffe verzweigte Kohlenwasserstoffe mit 32 bis 39 Kohlenstoffatomen sind; und wobei
f) 5 bis 15 % der Kohlenwasserstoffe verzweigte Kohlenwasserstoffe mit 40 bis 61 Kohlenstoffatomen sind,
wobei die Prozentangabe in jedem Fall auf die Gesamtzahl an Kohlenwasserstoffen mit 15 bis 110 Kohlenstoffatomen bezogen ist.

Kohlenwasserstoffe sind Moleküle, die aus Kohlenstoff und Wasserstoff bestehen.

Die erfindungsgemäß enthaltene wenigstens eine Kohlenwasserstoffwachs-Zusammensetzung weist Kohlenwasserstoffe mit 15 bis 110 Kohlenstoffatomen auf. Sämtliche Kohlenwasserstoffe der Merkmale a) bis einschließlich f) sind ausschließlich Kohlenwasserstoffe mit 15 bis 110 Kohlenstoffatomen.

Zu jeder Zahl der Kohlenstoffatome der Kohlenwasserstoffe wird die Häufigkeit der Kohlenwasserstoffe bestimmt und gegen die Zahl der Kohlenstoffatome aufgetragen, woraus sich die Häufigkeitsverteilung ergibt.
Die Häufigkeitsverteilung der wenigstens einen Kohlenwasserstoffwachs-Zusammensetzung wird im Rahmen der vorliegenden Erfindung mittels Gaschromatographie (GC, EWF-Methode 001/03 der European Wax Federation mit: Probenkonzentration 20 mg/20 mL Lösungsmittel; Trägergas Wasserstoff, 71 cm/Sek.; Säulentemperatur zu Beginn 75 °C; Aufheizraten von 25 °C/min bis 100 °C, 8 °C/min bis 325 °C, 325 °C für 15 min gehalten; Säulenabmessung 25 m, 0,32 µm i.d., 0,12 µm Filmdicke; Injektor Typ "Cool on column"; Ergebnis Häufigkeitsverteilung als Peakflächen-%) bestimmt. Mit dieser Methode wird ebenfalls bestimmt, ob es sich um ein lineares oder ein verzweigtes Kohlenwasserstoffmolekül handelt.
Die Anzahl bzw. die Häufigkeit der Kohlenwasserstoffmoleküle bei einer bestimmten Zahl an Kohlenstoffatomen pro Kohlenwasserstoffmolekül ist proportional zu der absoluten Signalintensität des GC-Chromatogramms bei dieser Zahl an Kohlenstoffatomen pro Kohlenwasserstoffmolekül und kann hieraus bestimmt werden.
Unter "linearen Kohlenwasserstoffen" werden im Rahmen der vorliegenden Erfindung, sofern nicht ausdrücklich anders beschrieben, lineare aliphatische Kohlenwasserstoffe verstanden.
Unter "verzweigten Kohlenwasserstoffen" werden im Rahmen der vorliegenden Erfindung, sofern nicht ausdrücklich anders beschrieben, verzweigte aliphatische Kohlenwasserstoffe verstanden.
Die linearen und verzweigten Kohlenwasserstoffe sind acyclisch.

Die Kohlenwasserstoffwachs-Zusammensetzung wird im Folgenden in bevorzugten Ausführungsformen weiter erläutert, die unabhängig voneinander sind und in jeglicher Kombination zu oben und unten genannten Ausführungsformen denkbar sind.

In einer bevorzugten Ausführungsform des Merkmals a) sind 26 bis 37 % der Kohlenwasserstoffe lineare Kohlenwasserstoffe mit 20 bis 30 Kohlenstoffatomen. Hiermit wird ein besonders gutes Ausblühverhalten in der erfindungsgemäßen Kautschukmischung erzielt, was sich in einem verbesserten optischen Erscheinungsbild der Kautschukmischung nach einer entsprechenden Dauer zeigt. Gleichzeitig bleibt die Ozonbeständigkeit auf einem guten Niveau.

In einer bevorzugten Ausführungsform des Merkmals c) sind 26 bis 37 % der Kohlenwasserstoffe lineare Kohlenwasserstoffe mit 39 bis 60 Kohlenstoffatomen.

Hiermit sowie mit den weiteren nachfolgend genannten bevorzugten Ausführungsformen betreffend die Häufigkeitsverteilung der Kohlenwasserstoffwachs-Zusammensetzung wird ein besonders gutes Ausblühverhalten in der erfindungsgemäßen Kautschukmischung erzielt, was sich in einem verbesserten optischen Erscheinungsbild der Kautschukmischung nach einer entsprechenden Dauer zeigt. Gleichzeitig bleibt die Ozonbeständigkeit auf einem guten Niveau.

In einer bevorzugten Ausführungsform des Merkmals d) sind 6 bis 8 % der Kohlenwasserstoffe verzweigte Kohlenwasserstoffe mit 21 bis 31 Kohlenstoffatomen.

In einer bevorzugten Ausführungsform des Merkmals f) sind 6 bis 12 % der Kohlenwasserstoffe verzweigte Kohlenwasserstoffe mit 40 bis 61 Kohlenstoffatomen.

In einer bevorzugten Ausführungsform des Merkmals b) sind 10 bis 16 % der Kohlenwasserstoffe lineare Kohlenwasserstoffe mit 31 bis 38 Kohlenstoffatomen.

In einer bevorzugten Ausführungsform des Merkmals e) sind 0,1 bis 3 % der Kohlenwasserstoffe verzweigte Kohlenwasserstoffe mit 32 bis 39 Kohlenstoffatomen.

Die in der erfindungsgemäßen Kautschukmischung enthaltene Kohlenwasserstoffwachs-Zusammensetzung wird zudem bevorzugt durch eine oder mehrere der folgenden Definitionen charakterisiert:
- Das Zahlenverhältnis der linearen Kohlenwasserstoffe gemäß Merkmal a) zu den linearen Kohlenwasserstoffen gemäß Merkmal c) beträgt zwischen 0,5 und 1,5, besonders bevorzugt zwischen 0,6 und 1,2; und/oder
- Das Zahlenverhältnis der verzweigten Kohlenwasserstoffe gemäß Merkmal d) zu den verzweigten Kohlenwasserstoffen gemäß Merkmal f) beträgt zwischen 0,5 und 1,5, besonders bevorzugt zwischen 0,6 und 1,2; und/oder
- Das Zahlenverhältnis der linearen Kohlenwasserstoffe gemäß Merkmal a) zu den linearen Kohlenwasserstoffen gemäß Merkmal b) beträgt zwischen 1,5 und 3,5, besonders bevorzugt zwischen 1,6 und 3,2; und/oder
- Das Zahlenverhältnis der linearen Kohlenwasserstoffe gemäß Merkmal c) zu den linearen Kohlenwasserstoffen gemäß Merkmal b) beträgt zwischen 2,0 und 4,0, besonders bevorzugt zwischen 2,2 und 3,2; und/oder
- Das Zahlenverhältnis der verzweigten Kohlenwasserstoffe gemäß Merkmal d) zu den verzweigten Kohlenwasserstoffen gemäß Merkmal e) beträgt zwischen 2,5 und 6,5, besonders bevorzugt zwischen 2,8 und 6,0; und/oder
- Das Zahlenverhältnis der verzweigten Kohlenwasserstoffe gemäß Merkmal f) zu den verzweigten Kohlenwasserstoffen gemäß Merkmal e) beträgt zwischen 4,0 und 7,0, besonders bevorzugt zwischen 4,5 und 6,5; und/oder
- Das Zahlenverhältnis der linearen Kohlenwasserstoffe gemäß Merkmal a) zu den verzweigten Kohlenwasserstoffen gemäß Merkmal d) beträgt zwischen 3,0 und 6,0, besonders bevorzugt zwischen 3,5 und 5,5; und/oder
- Das Zahlenverhältnis der linearen Kohlenwasserstoffe gemäß Merkmal c) zu den verzweigten Kohlenwasserstoffen gemäß Merkmal f) beträgt zwischen 3,0 und 6,0, besonders bevorzugt zwischen 3,2 und 5,0; und/oder
- Das Zahlenverhältnis der linearen Kohlenwasserstoffe gemäß Merkmal b) zu den verzweigten Kohlenwasserstoffen gemäß Merkmal e) beträgt zwischen 6,0 und 12,0, besonders bevorzugt zwischen 6,4 und 11,2.

Bei den genannten Bezügen auf die Merkmale a) bis f) ist die jeweilige Zahl der Kohlenstoffatome dieser Kohlenwasserstoffe gemeint. "Lineare Kohlenwasserstoffe gemäß Merkmal a)" meint beispielsweise lineare Kohlenwasserstoffe mit 20 bis 30 Kohlenstoffatomen.

Weiterhin sind bevorzugt 10 bis 30 %, besonders bevorzugt 15 bis 25 %, der Kohlenwasserstoffe der Kohlenwasserstoffwachs-Zusammensetzung verzweigte Kohlenwasserstoffe.
Die Prozentangabe ist der Anteil der verzweigten Kohlenwasserstoffe ermittelt durch deren Anzahl bezogen auf die Gesamtanzahl an Kohlenwasserstoffen mit 15 bis 110 Kohlenstoffatomen der Zusammensetzung B.

Hiermit wird ein besonders gutes Ausblühverhalten in der erfindungsgemäßen Kautschukmischung erzielt, was sich in einem verbesserten optischen Erscheinungsbild der Kautschukmischung nach einer entsprechenden Dauer zeigt. Gleichzeitig bleibt die Ozonbeständigkeit auf einem guten Niveau.

Die in der erfindungsgemäßen Kautschukmischung enthaltene Kohlenwasserstoffwachs-Zusammensetzung kann zudem oder alternativ folgendermaßen beschrieben werden: Eine Kohlenwasserstoffwachs-Zusammensetzung enthaltend lineare und verzweigte Kohlenwasserstoffe mit einer Häufigkeitsverteilung, ausgedrückt durch die Anzahl an Kohlenwasserstoffmolekülen pro Zahl an Kohlenstoffatomen (pro Kohlenwasserstoffmolekül), die wenigstens zwei Maxima zwischen 15 und 110 Kohlenstoffatomen aufweist und das jeweilige Maximum die größte Anzahl an Kohlenwasserstoffmolekülen innerhalb eines Bereiches von +/- 2 Kohlenstoffatomen darstellt, und wobei:
- wenigstens ein Maximum der linearen Kohlenwasserstoffen bei 23 bis 33 Kohlenstoffatomen und wenigstens ein Maximum der linearen Kohlenwasserstoffen bei 37 bis 48 Kohlenstoffatomen liegt; und wobei
- wenigstens ein Maximum der verzweigten Kohlenwasserstoffen bei 23 bis 33 Kohlenstoffatomen und wenigstens ein Maximum der verzweigten Kohlenwasserstoffen bei 37 bis 48 Kohlenstoffatomen liegt; und wobei
- das Maximum mit der größten Zahl an Kohlenstoffatomen im Bereich zwischen 23 und 33 Kohlenstoffatomen und das Maximum mit der geringsten Zahl an Kohlenstoffatomen im Bereich zwischen 37 und 48 Kohlenstoffatomen der linearen und der verzweigten Kohlenwasserstoffe sich um wenigstens 12 Kohlenstoffatome voneinander unterscheiden; und wobei
- die Häufigkeitsverteilung weder für lineare noch für verzweigte Kohlenwasserstoffe ein Maximum in dem genannten Bereich von wenigstens 12 Kohlenstoffatomen aufweist; und wobei
- die Häufigkeitsverteilung wenigstens ein Minimum von sowohl linearen als auch verzweigten Kohlenwasserstoffen jeweils bei 30 bis 36 Kohlenstoffatomen aufweist, wobei in jedem Fall das Minimum die kleinste Anzahl an Kohlenwasserstoffmolekülen in einem Bereich von +/- 2 Kohlenstoffatomen darstellt.

Bevorzugt weist die Häufigkeitsverteilung dieser zusätzlichen oder alternativen Definition wenigstens ein Maximum der linearen Kohlenwasserstoffen bei 23 bis 30 Kohlenstoffatomen, besonders bevorzugt 24 bis 29 Kohlenstoffatomen, auf.

Bevorzugt weist die Häufigkeitsverteilung dieser zusätzlichen oder alternativen Definition zudem wenigstens ein Maximum der linearen Kohlenwasserstoffen bei 39 bis 48 Kohlenstoffatomen, besonders bevorzugt 40 bis 43 Kohlenstoffatomen, auf.

Bevorzugt beträgt im Rahmen der zusätzlichen oder alternativen Definition der Anteil der verzweigten Kohlenwasserstoffen (Anzahl bezogen auf die Gesamtanzahl an Kohlenwasserstoffen) zwischen 15 und 25 %.

Die beschriebene Kohlenwasserstoffwachs-Zusammensetzung ist in Mengen von 0,5 bis 10 phr, bevorzugt 1 bis 5 phr, besonders bevorzugt 1 bis 3 phr in der erfindungsgemäßen Kautschukmischung enthalten.

Wie bereits oben ausgeführt, zeigt die erfindungsgemäße Kautschukmischung enthaltend die beschriebene Kohlenwasserstoffwachs-Zusammensetzung überraschenderweise gegenüber dem Stand der Technik ein verbessertes Ausblühverhalten, was sich in einem verbesserten optischen Erscheinungsbild der Kautschukmischung nach einer entsprechenden Dauer zeigt. Gleichzeitig bleibt die Ozonbeständigkeit auf einem guten Niveau.
Die Kohlenwasserstoffwachs-Zusammensetzung dient hierbei als Ozonschutzwachs.

Ferner ist es denkbar, dass zusätzlich zu der genannten Kohlenwasserstoffwachs-Zusammensetzung weitere im Stand der Technik bekannte Ozonschutzwachse in Mengen von 0 bis 3 phr in der Kautschukmischung enthalten sind.

Die erfindungsgemäß enthaltene Kohlenwasserstoffwachs-Zusammensetzung der erfindungsgemäßen Kautschukmischung, bevorzugt in wenigstens einer Grundmischstufe, in Form von Wachs-Pastillen oder Wachs-Pulver bestehend aus der beschriebenen Kohlenwasserstoffwachs-Zusammensetzung zugegeben werden.
Die enthaltene Kohlenwasserstoffwachs-Zusammensetzung kann durch selektive Vermischung verschiedener Kohlenwasserstoffwachs-Komponenten erhalten werden.

Beispielsweise kann
eine erste Kohlenwasserstoffwachs-Komponente umfassend 15 bis 110 Kohlenstoffatome mit mehr als 60 % linearen Kohlenwasserstoffen mit 20 bis 30 C-Atomen mit einer
zweiten Kohlenwasserstoffwachs-Komponente umfassend 15 bis 110 Kohlenstoffatome mit mehr als 45 %, bevorzugt mehr als 60 % linearen Kohlenwasserstoffen mit 39 bis 60 C-Atomen
in geschmolzenem Zustand vermischt werden.

Anschließend kann die Verfestigung erfolgen, beispielsweise durch Sprühkühlung oder Pastillierung oder Vertafelung.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Harze, wie Phenolharze und/oder aliphatische Harze, bei denen es sich nicht um Weichmacherharze handelt
d) Mastikationshilfsmittel, wie z. B. 2,2'-Dibenzamidodiphenyldisulfid (DBD),
e) Weichmacher, wie unten beschrieben, und
f) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis 4 phr, bevorzugt 0,1 bis 3,8 phr, besonders bevorzugt 2 bis 3,8 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine B ET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Es können in der Kautschukmischung noch 0 bis 70 phr, bevorzugt 0,1 bis 60 phr, bevorzugt 3 bis 30 phr, zumindest eines Weichmachers vorhanden sein, die zu den Zusatzstoffen zählen. Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (residual aromatic extract) oder TDAE (treated distillate aromatic extract) und/oder synthetischen Weichmachern und/oder Fettsäuren und/oder Fettsäurederivaten und/oder Weichmacherharze und/oder Faktisse und/oder Glyceriden und/oder Terpenen und/oder Biomass-to-Liquid-Öle (BTL) bevorzugt mit einem Gehalt an polyzyklischen Aromaten von weniger als 3 Gew.-% gemäß Methode IP 346 und/oder Rubber-To-Liquid-Ölen (RTL-Öle) und/oder oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.
Der Weichmacher ist bevorzugt ausgewählt aus der Gruppe bestehend aus den oben genannten Weichmachern.
Mineralöle sind als Weichmacher besonders bevorzugt. Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenisches Öl.

Die Vulkanisation der Kautschukmischung wird bevorzugt in Anwesenheit von Schwefel oder Schwefelspendern mit Hilfe von Vulkanisationsbeschleunigern durchgeführt, wobei einige Vulkanisationsbeschleuniger zugleich als Schwefelspender wirken können. Bevorzugt ist die erfindungsgemäße Kautschukmischung somit eine schwefelvernetzbare Kautschukmischung.
Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.
Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe).

Hiermit werden sehr gute Abrieb- und Reißeigenschaften der erfindungsgemäßen Kautschukmischung erzielt.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, wie z.B. ein Vulkanisationsmittel der Formel A), sowie die oben genannten Systeme Vulkuren®, Duralink® und Perkalink® begrifflich als Vulkanisationsmittel zusammengefasst.
Die erfindungsgemäße Kautschukmischung enthält bevorzugt wenigstens ein Vulkanisationsmittel ausgewählt aus der Gruppe enthaltend Schwefel und/oder Schwefelspender und/oder Vulkanisationsbeschleuniger und/oder Vulkanisationsmittel, die mit einer Funktionalität größer vier vernetzen. Hierdurch lassen sich aus der erfindungsgemäßen Kautschukmischung Vulkanisate, insbesondere für die Anwendung im Fahrzeugreifen, herstellen.

Gemäß einer bevorzugten Weiterbildung der Erfindung sind mehrere Beschleuniger in der Kautschukmischung enthalten.
Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Bevorzugt enthält die erfindungsgemäße Kautschukmischung elementaren Schwefel in Mengen von 0,5 bis 3 phr, bevorzugt 1 bis 3 phr, besonders bevorzugt 1 bis 2,7 phr, ganz besonders bevorzugt 1,3 bis 2,4 phr.
Gemäß einer besonders bevorzugten Ausführungsform der Erfindung enthält die Kautschukmischung 2,0 bis 2,4 phr Schwefel.
Eine derartige Kautschukmischung zeigt insbesondere in der Seitenwand von Fahrzeugreifen ein besonders gutes Ausblühverhalten sowie vergleichsweise gute Reiß- und Abriebeigenschaften, insbesondere nach der Alterung.

Bevorzugt enthält die erfindungsgemäße Kautschukmischung wenigstens einen Sulfenamidbeschleuniger in Mengen von 0,1 bis 4 phr, besonders bevorzugt 0,1 bis 3 phr, ganz besonders bevorzugt 0,5 bis 3 phr.
Gemäß einer besonders bevorzugten Ausführungsform der Erfindung enthält die Kautschukmischung 0,9 bis 1,3 phr zumindest eines Sulfenamidbeschleunigers.
Eine derartige Kautschukmischung zeigt insbesondere in der Seitenwand von Fahrzeugreifen ein besonders gutes Ausblühverhalten sowie vergleichsweise gute Reiß- und Abriebeigenschaften, insbesondere nach der Alterung.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Eine weitere Aufgabe der vorliegenden Erfindung besteht darin, einen Fahrzeugreifen bereitzustellen, der sich durch ein verbessertes optisches Erscheinungsbild hinsichtlich des Ausblühverhaltens auszeichnet, wobei die Ozonbeständigkeit und die Alterungsbeständigkeit sowie die übrigen Reifeneigenschaften, wie Handling-Verhalten und/oder Nassbremsen und/oder Reißeigenschaften und/oder Rollwiderstand, nicht negativ beeinträchtigt und/oder sogar verbessert werden. Gelöst wird diese Aufgabe dadurch, dass der Fahrzeugreifen in wenigstens einem Bauteil wenigstens ein Vulkanisat wenigstens einer Kautschukmischung wie oben beschrieben enthält. Dabei gelten alle oben genannten Ausführungen zu den Bestandteilen und deren Merkmale.
Bevorzugt handelt es sich bei dem Fahrzeugreifen um einen Fahrzeugluftreifen. Bevorzugt handelt es sich bei dem Bauteil um ein äußeres Bauteil, besonders bevorzugt um wenigstens eine Seitenwand und/oder wenigstens ein Hornprofil.
Ganz besonders bevorzugt handelt es sich um die Seitenwand.

Die Erfindung soll nun anhand von Vergleichs- und Ausführungsbeispielen, die in der Tabelle 1 zusammengefasst sind, näher erläutert werden.
Die Vergleichsmischungen sind mit V, und die erfindungsgemäße Mischung ist mit E gekennzeichnet.
In Tabelle 2 sind die wesentlichen Merkmale der Häufigkeitsverteilungen der eingesetzten Kohlenwasserstoffwachs-Zusammensetzungen (Ozonschutzwachse) einander gegenübergestellt. Hierbei stellen die mit V gekennzeichneten Wachse die in den Vergleichsmischungen eingesetzten Wachse aus dem Stand der Technik dar. Die mit E gekennzeichnete Kohlenwasserstoffwachs-Zusammensetzung ist in der erfindungsgemäßen Kautschukmischung E1 enthalten.

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte (Einheit Shore A, abgekürzt ShA) bei Raumtemperatur (RT) gemäß DIN 53 505
- Rückprallelastizität (abgekürzt Rückprall) bei Raumtemperatur (RT) gemäß DIN 53 512
- Zugfestigkeit bei Raumtemperatur gemäß DIN 53 504
- Ausblühverhalten: Vulkanisate wurden für 3 Monate, vor Feuchtigkeit und Sonneneinstrahlung geschützt, gelagert und anschließend visuell evaluiert. Klasse 1: zufriedenstellendes optisches Erscheinungsbild, Klasse 2: ausreichendes optisches Erscheinungsbild, Klasse 3: ungenügendes optisches Erscheinungsbild
- Ozonbeständigkeit bei Raumtemperatur gemäß der DIN 53 509 / DIN ISO 1431-1 ähnlichen Bedingungen: Ozonkonzentration 200 pphm, +/- 30 pphm, Temperatur 25°C +/-3 °C, 60% +/-5 % Luftfeuchtigkeit und einer statischer Dehnung zwischen 10 und 60%, wobei die Bewertung in Anlehnung an DIN 53 509 / DIN ISO 1431-1 erfolgt, Bewertung: positiv (keine Rissbildung) oder negativ (Rissbildung)

**Tabelle 1**

| **Bestandteile** | **Einheit** | **V1** | **V2** | **E1** |
|---|---|---|---|---|
| Naturkautschuk TSR | phr | 40 | 40 | 40 |
| Polyisopren, synthetisch | phr | 10 | 10 | 10 |
| Butadienkautschuk ^{A)} | phr | 20 | 20 | 20 |
| SBR ^{B)} | phr | 30 | 30 | 30 |
| Ruß N339 | phr | 33 | 33 | 33 |
| Alterungsschutzmittel | phr | 5 | 5 | 5 |
| Sonstige Zusatzstoffe ^{F)} | phr | 14,5 | 14,5 | 14,5 |
| Ozonschutzwachs A ^{C)} | phr | 2,3 | - | - |
| Ozonschutzwachs B ^{D)} | phr | - | - | 2,3 |
| Ozonschutzwachs C ^{E)} | phr | - | 1,5 | - |
| Schwefel und Sulfenamidbeschleuniger | phr | 3,3 | 3,3 | 3,3 |
| | | | | |

| **Eigenschaften** | | | | |
|---|---|---|---|---|
| Zugfestigkeit bei RT | MPa | 13,1 | 13,1 | 12,6 |
| Rückprallelastizität bei RT | % | 49 | 49 | 49 |
| Shore Härte bei RT | Shore A | 51 | 51 | 51 |
| Aus blühverhalten | Klasse | 2 | 3 | 1 |
| Ozonbeständigkeit | | positiv | positiv | positiv |

| | | | | |
|---|---|---|---|---|
| ^{A)} Butadienkautschuk, Nd-katalysiert, hoch-cis BR ^{B)} Styrol-Butadien-Kautschuk, lösungspolymerisiert, SBR 1500 ^{C)} Ozonschutzwachs A: Vergleichswachs VARAZON® 6500, Fa. Sasol Wax GmbH, Häufigkeitsverteilung: s. Tabelle 2 ^{D)} Ozonschutzwachs B: Häufigkeitsverteilung gemäß Anspruch 1: s. Tabelle 2 ^{E)} Ozonschutzwachs C: Vergleichswachs VARAZON® 6066, Fa. Sasol Wax GmbH, Häufigkeitsverteilung: s. Tabelle 2 ^{F)} Sonstige Zusatzstoffe: u.a. Zinkoxid, Stearinsäure, Weichmacher | | | | |

**Tabelle 2**

| Merkmal | % Kohlenwasserstoffe gemäß Anspruch 1 | A [%] | C [%] | B [%] |
|---|---|---|---|---|
| | | V | V | E |
| a) C₂₀₋₃₀ (linear) | 25 bis 40 | 29,0 | 41,4 | 26,4 |
| c) C₃₉₋₆₀ (linear) | 25 bis 40 | 15,2 | 3,4 | 35,4 |
| d) C₂₁₋₃₁ (verzweigt) | 5 bis 15 | 2,2 | 8,7 | 7,0 |
| f) C₄₀₋₆₁ (verzweigt) | 5 bis 15 | 10,1 | 7,0 | 10,8 |
| b) C₃₁₋₃₈ (linear) | 5 bis 18 | 35,4 | 22,2 | 15,2 |
| e) C₃₂₋₃₉ (verzweigt) | weniger als 5 | 7,3 | 17,3 | 2,3 |

Tabelle 2 zeigt die Häufigkeiten der verschiedenen Kohlenwasserstoffe der Kohlenwasserstoffwachs-Zusammensetzungen A, B und C in % gemäß Bestimmung mittels GC mit der oben beschriebenen Methode.

Zudem sind 21 % der Kohlenwasserstoffe der im erfindungsgemäßen Beispiel eingesetzten Wachszusammensetzung B verzweigte Kohlenwasserstoffe. Die Prozentangabe ist der Anteil der verzweigten Kohlenwasserstoffe ermittelt durch deren Anzahl bezogen auf die Gesamtanzahl an Kohlenwasserstoffen mit 15 bis 110 Kohlenstoffatomen der Zusammensetzung B.

Die Wachszusammensetzung kann beispielsweise durch Vermischen folgender Wachskomponenten erhalten werden:
- 45 Gew.-% eines raffinierten Paraffinwachses mit einem Erstarrungspunkt gemäß ASTM D 938 von 52 bis 54 °C, umfassend 81,3 % lineare Kohlenwasserstoffe mit 20 bis 30 Kohlenstoffatomen (Sasolwax 5203); und
- 45 Gew.-% eines mittels Fischer-Tropsch erhaltenen Paraffinwachses mit einem Erstarrungspunkt gemäß ASTM D 938 von 83 °C, umfassend 48,5 % lineare Kohlenwasserstoffe mit 39 bis 60 Kohlenstoffatomen (Sasolwax C80); und
- 10 Gew.-% eines wasserstoffbehandelten (*engl.* "hydrotreated") mikrokristallinem Wachs mit einem Erstarrungspunkt gemäß ASTM D 938 von 78 °C, umfassend 74,5 % verzweigte Kohlenwasserstoffe (Sasolwax 3279).

Wie aus der Tabelle 1 hervorgeht, zeigt die erfindungsgemäße Kautschukmischung E1 im Vergleich zu den
Vergleichsmischungen V1 und V2 ein besseres Ausblühverhalten, womit die erfindungsgemäße Mischung auf einem zufriedenstellenden Niveau liegt. Gleichzeitig werden die sonstigen Eigenschaften, insbesondere die Ozonbeständigkeit und Eigenschaften wie Zugfestigkeit, Härte und Rückprallelastizität, nicht signifikant negativ beeinträchtigt.

## Patentansprüche

1. Kautschukmischung enthaltend wenigstens die folgenden Bestandteile:
- Wenigstens einen Kautschuk und
- Wenigstens einen verstärkenden Füllstoff und
- 0,5 bis 10 phr wenigstens einer Kohlenwasserstoffwachs-Zusammensetzung, wobei die Kohlenwasserstoffe der Wachs-Zusammensetzung 15 bis 110 Kohlenstoffatome aufweisen und wobei:
a) 25 bis 40 % der Kohlenwasserstoffe lineare Kohlenwasserstoffe mit 20 bis 30 Kohlenstoffatomen sind; und wobei
b) 5 bis 18 % der Kohlenwasserstoffe lineare Kohlenwasserstoffe mit 31 bis 38 Kohlenstoffatomen sind; und wobei
c) 25 bis 40 % der Kohlenwasserstoffe lineare Kohlenwasserstoffe mit 39 bis 60 Kohlenstoffatomen sind; und wobei
d) 5 bis 15 % der Kohlenwasserstoffe verzweigte Kohlenwasserstoffe mit 21 bis 31 Kohlenstoffatomen sind; und wobei
e) weniger als 5 % der Kohlenwasserstoffe verzweigte Kohlenwasserstoffe mit 32 bis 39 Kohlenstoffatomen sind; und wobei
f) 5 bis 15 % der Kohlenwasserstoffe verzweigte Kohlenwasserstoffe mit 40 bis 61 Kohlenstoffatomen sind,
wobei die Prozentangabe in jedem Fall auf die Gesamtzahl an Kohlenwasserstoffen mit 15 bis 110 Kohlenstoffatomen bezogen ist.

2. Kautschukmischung nach Anspruch 1, **dadurch gekennzeichnet, dass** sie wenigstens einen Dienkautschuk ausgewählt aus der Gruppe bestehend aus synthetischem Polyisopren und natürlichem Polyisopren (NR) und Styrol-Butadien-Kautschuk (SBR) und Polybutadien (BR) enthält.

3. Kautschukmischung nach einem der Ansprüche 1 oder 2, **dadurch gekennzeichnet, dass** sie als verstärkenden Füllstoff wenigstens einen Ruß enthält.

4. Kautschukmischung nach Anspruch 3, **dadurch gekennzeichnet, dass** sie 25 bis 55 phr wenigstens eines Rußes enthält.

5. Kautschukmischung nach Anspruch 3, **dadurch gekennzeichnet, dass** sie 60 bis 85 phr wenigstens eines Rußes enthält.

6. Kautschukmischung nach einem der Ansprüche 1 bis 5, **dadurch gekennzeichnet, dass** 26 bis 37 % der Kohlenwasserstoffe lineare Kohlenwasserstoffe mit 20 bis 30 Kohlenstoffatomen sind.

7. Kautschukmischung nach einem der Ansprüche 1 bis 6, **dadurch gekennzeichnet, dass** 26 bis 37 % der Kohlenwasserstoffe lineare Kohlenwasserstoffe mit 39 bis 60 Kohlenstoffatomen sind.

8. Kautschukmischung nach einem der Ansprüche 1 bis 7, **dadurch gekennzeichnet, dass** 10 bis 30 % der Kohlenwasserstoffe der Kohlenwasserstoffwachs-Zusammensetzung verzweigte Kohlenwasserstoffe sind.

9. Fahrzeugreifen, **dadurch gekennzeichnet, dass** er wenigstens ein Vulkanisat wenigstens einer Kautschukmischung gemäß einem der Ansprüche 1 bis 8 in wenigstens einem äußeren Bauteil aufweist.

10. Fahrzeugreifen nach Anspruch 9, **dadurch gekennzeichnet, dass** es sich bei dem Bauteil wenigstens um eine Seitenwand und/oder ein Hornprofil handelt.

## Claims

1. Rubber mixture comprising at least the following constituents:
- at least one rubber and
- at least one reinforcing filler and
- 0.5 to 10 phr of at least one hydrocarbon wax composition, where the hydrocarbons in the wax composition have 15 to 110 carbon atoms and where:
a) 25% to 40% of the hydrocarbons are linear hydrocarbons having 20 to 30 carbon atoms; and where
b) 5% to 18% of the hydrocarbons are linear hydrocarbons having 31 to 38 carbon atoms; and where
c) 25% to 40% of the hydrocarbons are linear hydrocarbons having 39 to 60 carbon atoms; and where
d) 5% to 15% of the hydrocarbons are branched hydrocarbons having 21 to 31 carbon atoms; and where
e) less than 5% of the hydrocarbons are branched hydrocarbons having 32 to 39 carbon atoms; and where
f) 5% to 15% of the hydrocarbons are branched hydrocarbons having 40 to 61 carbon atoms,
where the percentage in each case is based on the total number of hydrocarbons having 15 to 110 carbon atoms.

2. Rubber mixture according to Claim 1, **characterized in that** it comprises at least one diene rubber selected from the group consisting of synthetic polyisoprene and natural polyisoprene (NR) and styrene-butadiene rubber (SBR) and polybutadiene (BR).

3. Rubber mixture according to either of Claims 1 and 2, **characterized in that** it comprises at least one carbon black as reinforcing filler.

4. Rubber mixture according to Claim 3, **characterized in that** it contains 25 to 55 phr of at least one carbon black.

5. Rubber mixture according to Claim 3, **characterized in that** it contains 60 to 85 phr of at least one carbon black.

6. Rubber mixture according to any of Claims 1 to 5, **characterized in that** 26% to 37% of the hydrocarbons are linear hydrocarbons having 20 to 30 carbon atoms.

7. Rubber mixture according to any of Claims 1 to 6, **characterized in that** 26% to 37% of the hydrocarbons are linear hydrocarbons having 39 to 60 carbon atoms.

8. Rubber mixture according to any of Claims 1 to 7, **characterized in that** 10% to 30% of the hydrocarbons in the hydrocarbon wax composition are branched hydrocarbons.

9. Motor vehicle tire, **characterized in that** it includes at least one vulcanizate of at least one rubber mixture according to at least one of Claims 1 to 8 in at least one outer component.

10. Motor vehicle tire according to Claim 9, **characterized in that** the component is is at least a sidewall and/or a flange profile.

## Revendications

1. Mélange de caoutchouc contenant au moins les constituants suivants :
- au moins un caoutchouc, et
- au moins une charge de renforcement, et
- 0,5 à 10 pce d'au moins une composition de cire hydrocarbonée, les hydrocarbures de la composition de cire comprenant 15 à 110 atomes de carbone, et :
a) 25 à 40 % des hydrocarbures étant des hydrocarbures linéaires contenant 20 à 30 atomes de carbone ; et
b) 5 à 18 % des hydrocarbures étant des hydrocarbures linéaires contenant 31 à 38 atomes de carbone ; et
c) 25 à 40 % des hydrocarbures étant des hydrocarbures linéaires contenant 39 à 60 atomes de carbone ; et
d) 5 à 15 % des hydrocarbures étant des hydrocarbures ramifiés contenant 21 à 31 atomes de carbone ; et
e) moins de 5 % des hydrocarbures étant des hydrocarbures ramifiés contenant 32 à 39 atomes de carbone ; et
f) 5 à 15 % des hydrocarbures étant des hydrocarbures ramifiés contenant 40 à 61 atomes de carbone,
les données de pourcentage se rapportant dans chaque cas au nombre total d'hydrocarbures contenant 15 à 110 atomes de carbone.

2. Mélange de caoutchouc selon la revendication 1, **caractérisé en ce qu'**il contient au moins un caoutchouc diénique choisi dans le groupe constitué par le polyisoprène synthétique et le polyisoprène naturel (NR) et le caoutchouc de styrène-butadiène (SBR) et le polybutadiène (BR).

3. Mélange de caoutchouc selon l'une quelconque des revendications 1 ou 2, **caractérisé en ce qu'**il contient au moins un noir de carbone en tant que charge de renforcement.

4. Mélange de caoutchouc selon la revendication 3, **caractérisé en ce qu'**il contient 25 à 55 pce d'au moins un noir de carbone.

5. Mélange de caoutchouc selon la revendication 3, **caractérisé en ce qu'**il contient 60 à 85 pce d'au moins un noir de carbone.

6. Mélange de caoutchouc selon l'une quelconque des revendications 1 à 5, **caractérisé en ce que** 26 à 37 % des hydrocarbures sont des hydrocarbures linéaires contenant 20 à 30 atomes de carbone.

7. Mélange de caoutchouc selon l'une quelconque des revendications 1 à 6, **caractérisé en ce que** 26 à 37 % des hydrocarbures sont des hydrocarbures linéaires contenant 39 à 60 atomes de carbone.

8. Mélange de caoutchouc selon l'une quelconque des revendications 1 à 7, **caractérisé en ce que** 10 à 30 % des hydrocarbures de la composition de cire hydrocarbonée sont des hydrocarbures ramifiés.

9. Pneu de véhicule, **caractérisé en ce qu'**il comprend au moins un vulcanisat d'au moins un mélange de caoutchouc selon l'une quelconque des revendications 1 à 8 dans au moins un composant extérieur.

10. Pneu de véhicule selon la revendication 9, **caractérisé en ce que** le composant consiste au moins en une paroi latérale et/ou en un profilé de rebord.
